# EUROPEAN PATENT APPLICATION

(11) **EP 4 275 830 A1**
(43) Date of publication of application: **15.11.2023**
(21) Application number: 23173228.0
(22) Date of filing: 12.05.2023
(51) Int. Cl.: B23K 26/00, B23K 26/12, B23K 26/142, B23K 31/12, B23K 37/00

(54) **PORTABLE DEVICE FOR LASER MARKING**

(30) Priority: 13.05.2022 IT 202200009983
(71) Applicant: Automator Marking Systems S.r.l., 20123 Milano (MI) (IT)
(72) Inventor: BARCILON BRAMBILLA, Jaime Alberto, 20123 Milano (MI) (IT)
(74) Representative: Brunacci, Marco

(57) **Abstract**

The invention relates to a portable device for laser marking capable of detecting the presence of defects on the surface to be marked and/or its misplacement. A portable device (1) for laser marking is disclosed, which comprises

- at least one marking head (2) provided with at least one gripping element (23) graspable by a user;
- at least one marking chamber (2a) associated with said marking head (2) positionable between a laser light generator configured to generate a laser light beam and a surface to be marked (S), said marking chamber (2a) comprising at least one head end (4) having a marking opening (5) for the passage of said laser light beam, wherein said head end (4) is intended, in use, to contact said surface to be marked (S) so that the latter closes said marking opening (5);
- at least one inlet line (6) in fluidic communication with said marking chamber (2a) and configured to feed, into the latter, a substantially constant flow of air;
- at least one air outlet opening (7) formed on said marking chamber (2a) and configured to allow air to escape from said marking chamber (2a) and fumes generated by the laser light beam during the marking of the surface to be marked (S);
- at least one measurement assembly (8) arranged at least partly inside said marking head (2), operationally associated with said marking chamber (2a) and configured to verify whether the value of the internal pressure (P_{I} ) in said marking chamber (2a) and/or said flow of air fed from said inlet line (6) falls within a predetermined range of values in order to determine the possible presence of defects in said surface to be marked (S).

## Description

### Technical Field

The present invention relates to a portable device for laser marking, specifically a portable device for laser marking in safety class 1, in accordance with IEC 60825-1 and/or other standards related to laser machine safety guidelines.

Laser marking is a widely used technology which allows, through the release of a localized beam of energy, the surface of an object to be altered in order to produce desired shapes or lettering on the object itself.

### Background Art

Typically, known devices for laser marking comprise a marking head configured to generate a beam/ray of laser light which is focused on the surface of the object to be marked.

In order to ensure high safety standards, it is particularly useful to know whether a surface to be marked is properly positioned in front of the marking head so that the laser light beam only hits the surface and is not scattered into the environment.

For this reason, some known devices for laser marking involve the use of a control system provided with a plurality of safety sensors arranged along a contact edge of the marking head with the surface to be marked. Such safety sensors are adapted to detect the pressure exerted by the contact edge against the surface to be marked so that the correct positioning of the latter can be automatically monitored. Such sensors may be, e.g., a magnetic sensor, a pressure sensor, a REED switch, a Hall sensor or a piezoelectric sensor such as, e.g., described in EP3427887A1.

However, such a solution only allows to verify the correct positioning of the surface to be marked but does not allow to detect the presence of possible defects, such as deformations or holes, which can scatter the laser light beam outside the marking area, going to unintentionally ruin and damage other surfaces or the user.

To partly solve these drawbacks, laser marking systems are known to be provided with a sealing assembly located between the marking head and the surface to be marked. Such a sealing assembly comprises a sealing head configured to contact the surface to be marked, defining with the latter a marking chamber through which the laser beam is made to pass. Said sealing head also comprises a vacuum chamber surrounding the marking chamber and wherein a vacuum is created which is able to seal the head and the surface to be marked between them. The sealing assembly also has a sensor configured to measure the value of the vacuum made. This sensor is operationally connected to a control mechanism capable of controlling the operation of the marking head according to the measured vacuum value. In the event of the sealing assembly failing to achieve vacuum, this information is transmitted to the control mechanism, which stops the marking process until the situation is corrected. The reasons for the failure to make vacuum can be, e.g., the presence of a deformation in the surface to be marked, the presence of a defect, such as e.g. a hole, and so on.

Although such known systems partly succeed in solving the problems outlined above, additional problems appear to be present related in particular to the fact that the control of the evenness of the surface to be marked only occurs at the vacuum chamber, while no control is present in the marking chamber. Additional problems that arise in such known systems relate to the fact that the formation of the vacuum inside a chamber is not always easy to achieve, and it has numerous complications that result in difficulty of implementation and extremely high production costs.

Finally, another issue with such known systems is related to the fact that during the marking process, the laser etching the surface creates waste fumes that get trapped inside the marking chamber, interfering with and disturbing the laser light beam.

The removal of such fumes therefore requires the interruption of the marking process and of the checking process of the evenness of the surface to be marked. To fix, at least partly, the above problems, laser marking devices constructed in accordance with the teachings of patent documents EP2564977B1 and EP3427887A1 are known.

Specifically, the device disclosed by EP2564977B1 comprises a marking head for emitting the laser beam, consisting of two sections which can be axially moved closer to each other, and a sealing hood joined to the marking head and defining a working space between the surface of the workpiece to be marked and the marking head itself.

For the purpose of interrupting laser emission when the sealing hood insulation in the workspace is not guaranteed, the device of EP2564977B1 is provided with:
- a plurality of pressure sensors configured to assess a pressure difference between the interior of the workspace and the ambient air; and
- a plurality of safety switches which can be activated to allow the laser beam to be emitted when the two sections of the marking head are pressed towards each other.

In addition, this device comprises special air supply channels which are adapted to direct air to the laser beam generating lens so as to prevent particles produced during the marking process from resulting in soiling of the lens.

Thus, in this case, the purpose of feeding gas into the hood is to keep the lens clean, thus ensuring that the emitted laser is properly focused.

On the other hand, as for patent EP3427887A1, it describes a device provided with components similar to that of EP2564977B1, but different from the latter in that the working space between the surface of the workpiece to be marked and the marking head is divided by an optically transparent barrier which allows the two volumes to be filled with different gases.

In this regard, the device of EP3427887A1 comprises cooling means associated with the marking head and comprising:
- a first supply line of a first cooling gas (e.g., air) intended to fill the volume comprised between the lens and the barrier that escapes through the outlet; and
- a second supply line obtained into the wall of the hood and intended to emit a second gas (e.g., nitrogen) which ensures that the bottom of the barrier is cleaned of any exhaust particles subsequently drawn through the outlet.

Thus, in this case, the input of gas inside the hood also serves the purpose of cooling the devices inside the marking head, thus preventing their possible overheating from causing them to malfunction.

Since they do not require vacuum generation for their operation, the devices of EP2564977B1 and EP3427887A1 enable fixing the related issues just discussed regarding the device of EP3427887A1.

Despite this, even the devices disclosed within these patent documents are themselves susceptible to refinements aimed primarily at enabling their safer and more efficient use as well as increasing their versatility and adaptability of use.

### Description of the Invention

The Applicant has, therefore, planned to make a portable device for laser marking provided with a control system based on the generation of a greater pressure inside the marking chamber than atmospheric pressure so as to allow the removal of waste fumes and, at the same time, to check for defects in the surface to be marked and a possible displacement or disconnection of the surface from the device.

Therefore, the main aim of the present invention is to devise a portable device for laser marking capable of detecting the presence of defects on the surface to be marked and/or its misplacement and, at the same time, removing the fumes generated during the class 1 marking process.

Another object of the present invention is to devise a portable device for laser marking which allows the aforementioned drawbacks of the prior art to be overcome within the framework of a simple, rational, easy and effective to use as well as affordable solution.

The aforementioned objects are achieved by this portable device for laser marking having the characteristics of claim 1.

### Brief Description of the Drawings

Other characteristics and advantages of the present invention will become more apparent from the description of a preferred, but not exclusive, embodiment of a portable device for laser marking, illustrated by way of an indicative, yet nonlimiting, in the accompanying tables of drawings wherein:
Figure 1 shows, in axonometric view, the device according to the invention and a surface to be marked;
Figure 2 is an axonometric overall view of the device according to the invention placed in contact with the aforementioned surface to be marked;
Figure 3 is an axonometric view showing the measurement assembly and the conveyor pipes of the device according to the invention;
Figures 4 and 5 show, in front view, the plug element of the device according to the invention in two different operating configurations;
Figure 6 is an axonometric view showing a pair of interchangeable marking chambers;
Figure 7 schematically shows the operation of the device according to the invention.

### Embodiments of the Invention

With particular reference to these figures, reference numeral 1 globally denotes a portable device for laser marking.

The portable device 1 allows for the creation of a controlled confined space through which a beam/ray of laser light directed at a surface to be marked S is made to pass. According to the invention, the portable device 1 is able to verify whether the marking process is carried out safely, while allowing for the removal of fumes generated by the laser light beam/ray etching on the surface to be marked S.

The term "fumes" refers to all those waste products, such as ash and fragments of unburned materials, produced by the combustion process generated by the beam/ray of laser light hitting the surface to be marked S.

As will be better appreciated in the following description, the portable device 1 allows the detection of the presence of possible defects in the surface to be marked S that could lead to scattering of the laser light beam/ray outside the confined space to undesirable areas. Such defects may be, e.g., the presence of deformations and holes, as well as improper positioning of the surface to be marked S with respect to the portable device 1.

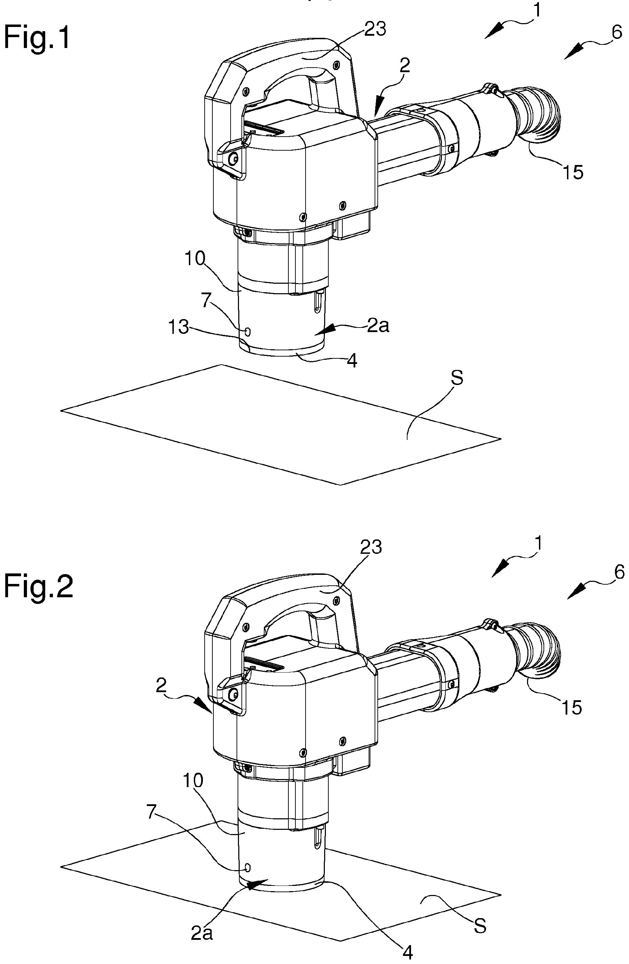

As visible from Figure 1, the portable device 1 comprises at least one marking head 2 provided with at least one gripping element 23 graspable by a user.

The gripping element 23 may be of the type of one or more handles, or it may equivalently be of different types known to the expert in the field that enable, in any case, a firm grasp of the portable device 1 by the user.

Again, the portable device 1 comprises a marking chamber 2a associated with the marking head 2 and positionable between a laser light generator, configured to generate a laser light beam/ray, and a surface to be marked S. As is known, the laser light generator is capable of generating a laser light beam/ray along an optical emission path which, suitably deflected by at least one or more deflection mirrors, is sent towards the surface to be marked S. The marking head 2 may be provided with one or more optical means to focus the laser beam along the emission optical path towards the surface to be marked S. The operation of the laser light generator is known in the state of the art and therefore will not be discussed in detail in this description. The laser light generator can be mounted inside the marking head 2 or be part of an external device connectable to the device 1.

In the present case, the marking chamber 2a is intended, in use, to be placed in contact with a surface to be marked S to allow the laser light beam to pass from the laser light generator to the surface to be marked S.

Appropriately, the marking chamber 2a comprises a head end 4 having a marking opening 5 adapted to allow the laser light beam/ray to pass through. In the present case, the laser light generator generates a laser light beam which, crossing the marking chamber 2a, passes through the marking opening 5 to hit the surface to be marked S.

Conveniently, as visible in Figure 2, the head end 4, in use, is intended to contact the surface to be marked S so that the latter closes the marking opening 5 at least during marking.

Appropriately, the head end 4 has at least one contact edge 13 adapted to contact and stop against the surface to be marked S. In particular, the contact edge 13 bounds the marking opening 5. Preferably, the contact edge 13 has a substantially circular shape. It cannot, however, be ruled out that the contact edge 13 may have a different conformation, such as e.g. triangular, square and so on.

Conveniently, the contact edge 13 has a sealing component which is adapted to seal the contact edge 13 with the surface to be marked S.

Specifically, the surface to be marked S plugs the marking opening 5 by bounding with the marking chamber 2a a confined, substantially enclosed space within which the laser light beam is contained to make an environment wherein marking is safely carried out.

As will be detailed in the following description, the control of the confined space bounded by the marking chamber 2a and by the surface to be marked S is carried out by means of an appropriate pressurization system capable of generating a greater pressure inside the marking chamber 2a than the atmospheric pressure, i.e., the pressure present outside the marking chamber 2a. For this purpose, as visible from Figures 1, 2 and 7, the portable device 1 comprises an inlet line 6 in fluidic communication with the marking chamber 2a and configured to feed a substantially constant flow of air into the latter.

Additionally, the portable device 1 comprises at least one air outlet opening 7 cut out on the marking chamber 2a and configured to allow air to escape from the marking chamber 2a and, therewith, any fumes generated by the laser light beam/ray during the marking of the surface to be marked S.

In the present case, the inlet line 6 and the air outlet opening 7 are configured to operate in conjunction with each other in order to make in the marking chamber 2a, when the marking opening 5 is effectively closed, a substantially constant internal pressure. In actual facts, when the surface to be marked S effectively closes the marking opening 5, by making a confined space wherein there is no unwanted air leakage, the inlet line 6 and the air outlet opening 7 allow a substantially constant pressure to be generated in the marking chamber 2a.

The marking opening 5 is effectively closed when no air escapes from the latter or the escaping air is insignificant in the total balance of the flow of air passing through the marking chamber 2a.

The inlet line 6, by feeding a constant flow of air into the marking chamber 2a, generates in the latter an internal pressure P_{I} having a greater value than atmospheric pressure, i.e., the pressure present outside the marking chamber 2a. This difference in pressure between the inside and the outside of the marking chamber 2a generates a flow of air which escapes through the air outlet opening 7, dragging with it any fumes generated during the marking process.

Preferably, as will be described in detail later in the description, the inlet line 6 and the air outlet opening 7 are adapted to generate, when the marking opening 5 is effectively closed, an internal pressure P_{I} to the marking chamber 2a within a well-defined range of predetermined values.

In actual facts, the size of the air outlet opening 7 and the flow of air fed from the inlet line 6 into the marking chamber 2a are predetermined to generate in the latter, when the marking opening 5 is effectively closed, a pressure comprised between predetermined limit values.

Specifically, the marking chamber 2a is configured to allow air to escape only from the air outlet opening 7 and from the marking opening 5. The inlet line 6 is adapted to feed a substantially constant flow of air into the marking chamber 2a having a value such that, when the marking opening 5 is effectively closed, it can generate within the marking chamber 2a an internal pressure P_{I} comprised within the predetermined range of values.

Advantageously, the portable device 1 comprises at least one measurement assembly 8 arranged, at least partly, within the marking head 2, operationally associated at least with the marking chamber 2a and configured to verify whether the value of the internal pressure P_{I} in the marking chamber 2a and/or the flow of air fed from the inlet line 6 falls within the predetermined range of values.

In particular, this makes it possible to determine the possible presence of defects in the surface to be marked S or the absence of the latter. In actual facts, by means of the measurement assembly 8 it is possible to verify whether the internal pressure in the marking chamber 2a always remains within the predetermined limit values and does not decrease abnormally. This is because a decrease in the internal pressure P_{I}, as explained later in the description, could mean that there is the presence of a defect in the surface to be marked S.

The term "defect" is intended to denote both structural defects of the surface to be marked, such as e.g. deformations or holes, and defects in the positioning of the surface to be marked S with respect to the portable device 1.

Preferably, the predetermined range of values is comprised between 0.01 bar and 8 bar. Even more preferably, the predetermined range of values is comprised between 0.05 bar and 2 bar.

As stated above, the inlet line 6 and the air outlet opening 7 are adapted to generate in the marking chamber 2a an internal pressure P_{I} comprised within the predetermined range of values only in the case wherein the marking opening 5 is effectively closed by the surface to be marked S.

In other words, this occurs only when no unwanted exit of the laser beam is possible with respect to the surface to be marked S, i.e., when the latter is correctly positioned in front of the head end 4 and no defects are present.

Therefore, a lower internal pressure P_{I} than the minimum value of the predetermined range of values may be related to the presence of defects on the surface to be marked S and/or to an incorrect positioning of the latter since it would mean that air escapes not only from the air outlet opening 7 but also from the marking opening 5.

This expedient is particularly effective in that it allows the simultaneous control of the surface to be marked S, by increasing the safety level of the portable device 1, and the removal from the marking chamber 2a of any fumes generated by the marking process.

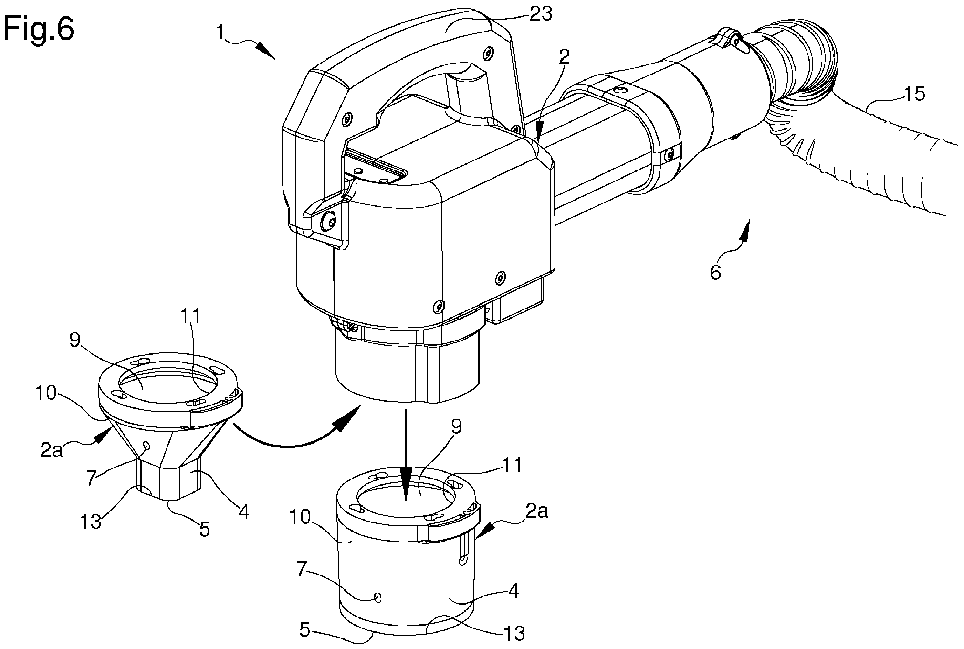

As shown in Figure 6, the marking chamber 2a bounds a compartment 9 suitable for the passage of the laser light beam/ray to the marking opening 5. Specifically, the marking chamber 2a has a perimeter envelope that bounds the compartment 9.

The marking chamber 2a has a head end 4, in use adapted to contact the surface to be marked S, and a connecting portion 10 adapted to be associated with the laser light generator. Preferably, the connecting portion 10 also comprises an access opening 11 through which the laser light generator can feed a laser light beam/ray into the marking chamber 2a. It cannot, however, be ruled out that the laser light generator may be arranged internally to the marking chamber 2a, and thus the latter lacks the access opening 11 or the access opening 11 is configured to be able to insert the laser light generator internally to the marking chamber 2a.

After having associated with the laser light generator and placed properly in contact with a defect-free surface to be marked S, the marking chamber 2a generates a substantially sealed space wherein the exchange of air with the external environment occurs via the inlet line 6, the air outlet opening 7 and the marking opening 5.

Specifically, the portable device 1 comprises connection means, not shown in the figures, arranged at least partly where the connecting portion 10 is located and configured to make a watertight connection with the laser light generator.

According to one or more embodiments, the connection means have a sealing component, not shown, arranged where the connecting portion 10 is located so as to prevent air leakage. Preferably, such a sealing gasket is arranged to surround the access opening 11.

According to one or more embodiments, to achieve a watertight connection, the connection means preferably comprise an optically transparent barrier arranged between the head end 4 and the connecting portion 10 so as to divide the marking chamber 2a into a control area, arranged in the head end 4, and a connecting area arranged in the connecting portion 10. The optically transparent barrier is configured to separate the two areas, preventing air exchange and, at the same time, allowing the laser light beam/ray to pass through.

Conveniently, the marking chamber 2a has a substantially elongated shape and extends along a longitudinal direction between the connecting portion 10 and the head end 4.

Preferably, the marking chamber 2a may have a substantially tubular conformation, that is, having a substantially circular cross section.

It cannot, however, be ruled out that the marking chamber 2a may have different conformations such as e.g. parallelepipedal.

Again, in the case of tubular conformation, the marking chamber 2a has a length comprised between 50 and 500 mm, preferably 200 mm. Also, the marking chamber 2a has a width, meant as diameter, comprised between 10 and 350 mm, preferably 120 mm.

In this regard, the marking chamber 2a is associated with the marking head 2 in a removable manner.

In this way, the marking chamber 2a can be removed from the marking head 2 and easily maintained/replaced as needed.

Advantageously, as shown in Figure 6, the device 1 comprises a plurality of marking chambers 2a, differing from each other in shape and/or size, which can be associated with the marking head 2 in an interchangeable manner.

For example, a marking chamber 2a having tubular conformation and one or more marking chambers 2a having respective prismatic conformations can be provided.

This possibility allows employing a marking chamber 2a provided with a specific and well-defined conformation, if necessary (e.g., depending on the marking surface S or other operational circumstances), thus greatly increasing the adaptability and versatility of use of the device 1.

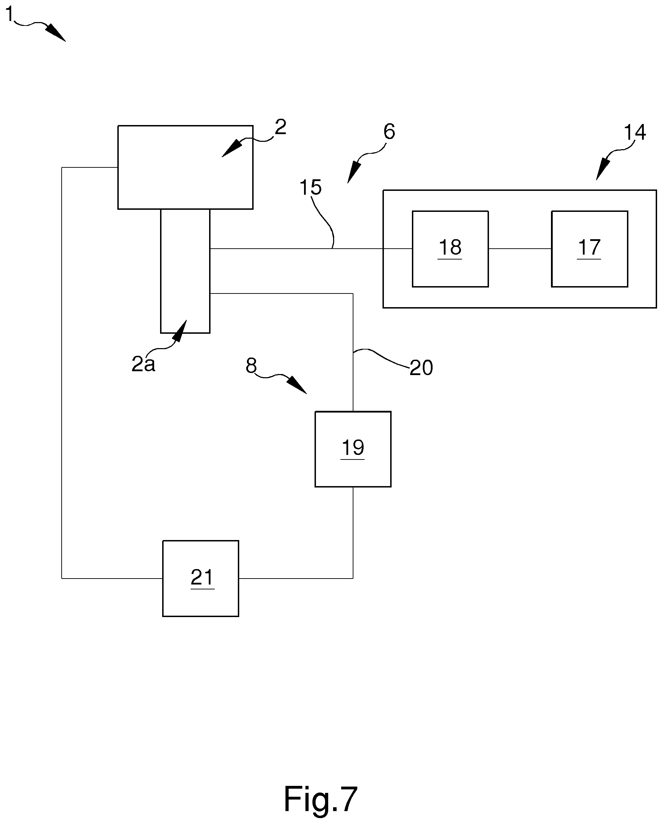

As visible from Figure 7, the inlet line 6 comprises inlet means 14 configured to feed a constant flow of air into the marking chamber 2a.

Preferably, the inlet means 14 can be adjusted, e.g. by the control means described later in the description or by other components not described, to vary the inlet flow of air.

The inlet line 6 also has at least one inlet duct 15 adapted to connect the inlet means 14 with the marking chamber 2a in a fluid-operated manner. In particular, the inlet duct 15 is adapted to be connected to the marking chamber 2a and to the inlet means 14 in a fluid-operated manner so as to allow a flow of air to flow from the inlet means 14 towards the marking chamber 2a.

With particular reference to Figure 7, the inlet means 14 comprise at least one supply device 17 configured to supply the inlet duct 15 with a flow of air and a pressure regulator 18, also called a pressure reducer, adapted to regulate the pressure of the flow of air generated by the supply device 17.

Preferably, the supply device 17 is a pressurized gas source. It cannot, however, be ruled out that the supply device 17 may be different.

Preferably, the pressure regulator 18 is a valve arranged along the inlet duct 15 in order to regulate the pressure of the flow of air flowing through the inlet duct 15. Preferably, the valve 18 is of the type of a solenoid valve, that is, a valve adapted to be controlled electrically.

As visible from Figure 1, the air outlet opening 7 is a through hole cut on the marking chamber 2a.

Appropriately, the air outlet opening 7 has a diameter comprised between 0.1 and 5 mm, preferably 1.5 mm.

In one or more embodiments, the air outlet opening 7 may be operationally connected to means for air intake, such as e.g. a Venturi device.

In the preferred embodiment, the portable device 1 has only one air outlet opening 7. It cannot, however, be ruled out that the portable device 1 may have a plurality of air outlet openings 7.

As anticipated above, the measurement assembly 8 is configured to measure the internal pressure P_{I} of the marking chamber 2a. It cannot, however, be ruled out that such measurement can be made where the air outlet opening 7 is located.

Specifically, the device 1 comprises at least one duct 20 positioned in fluidic connection between the marking chamber 2a and the measurement assembly 8, the latter comprising at least one measurement device 19 associated with the duct 20 and adapted to receive from the latter the flow of air to measure the internal pressure value P_{I}.

Preferably, the measurement device 19 is of the type of a pressure switch.

In this regard, the measurement device 19 is advantageously of the digital type. In actual facts, the measurement device 19 is configured to be controlled by an electronic device in order to take a measurement and to generate a measurement signal which is representative of the measured pressure value.

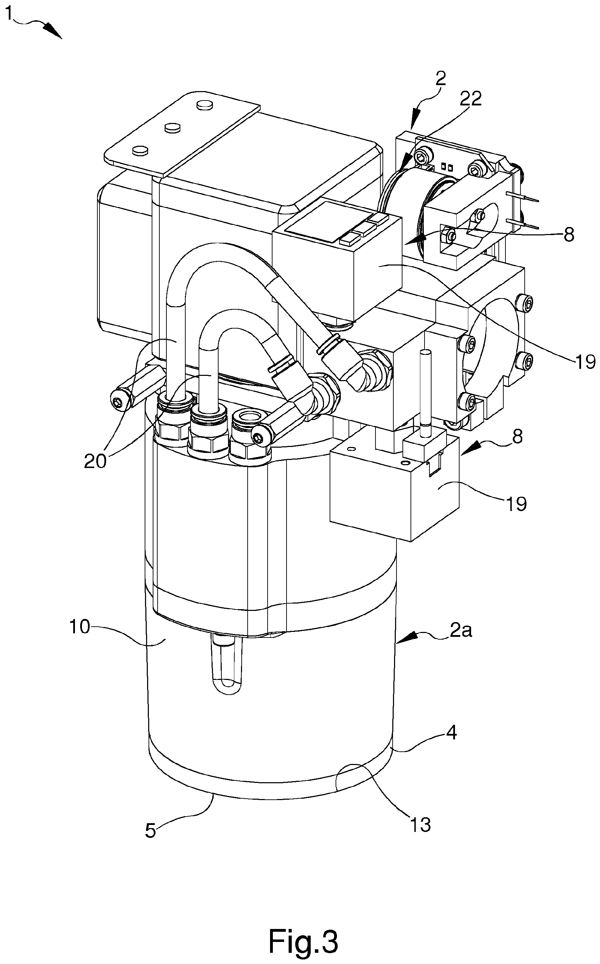

Advantageously, as visible in Figure 3, the device 1 comprises two ducts 20. Again, with reference to the same figure, the measurement assembly 8 comprises two measurement devices 19 mutually connected and each associated with a respective duct 20.

Specifically, the measurement devices 19 are connected to each other in parallel.

Alternatively, the measurement devices 19 can be connected to each other in series.

The fact of providing two measurement devices 19, each connected to the marking chamber 2a by means of a respective duct 20, allows greatly increasing the reliability of use of the device 1, preventing any malfunction at one of the measurement devices 19 from affecting the overall operation of the device itself.

As anticipated above, the portable device 1 allows verifying whether the surface to be marked S is correctly positioned in front of the marking chamber 2a and is free of defects.

In order to better appreciate the operation of the present invention, it is useful to note that in the case of the surface to be marked S effectively closing the marking opening 5, i.e., it is correctly positioned and has no defects, two main phases follow from the beginning of the air intake into the marking chamber 2a:
- a first phase wherein the internal pressure is continuously increasing until a balancing value is reached, and
- a second phase wherein the internal pressure of the marking chamber 2a remains substantially constant at this balancing value.

The portable device 1 as devised allows for verification of the internal pressure during both the first phase and the second phase. For this purpose, the measurement assembly 8 comprises verification means 21 (e.g., an electronic comparator) configured to verify whether the internal pressure P_{I} falls within the predetermined range of values during the inlet of air into the marking chamber 2a by the inlet line 6.

Suppose, for example, that the verification is carried out during the first phase when the internal pressure P_{I} should theoretically increase. If the comparator 21 detects a lower internal pressure P_{I} than the lower limit of the predetermined range of values, this would mean that air is escaping not only from the air outlet opening 7 but also from the marking opening 5, thus suggesting the presence of defects in the surface to be marked S or the incorrect positioning of the latter. The same reasoning can be made in case the verification is carried out in the second phase wherein the pressure should remain constant and not decrease.

According to one embodiment, the increase in pressure during the first phase could have a trend known in advance. In this embodiment, the comparator 21 could be configured to determine the pressure trend during the first phase and to verify whether it is substantially similar to the known trend, unless negligible errors.

As will be shortly explained in detail, the comparator 21 is configured to activate the measurement devices 19 in order to make a measurement of the internal pressure P_{I} of the marking chamber 2a and to receive the value of that measurement. Advantageously, the comparator 21 is configured to make, by means of the measurement devices 19, a plurality of measurements of the internal pressure P_{I} of the marking chamber 2a in order to compare them with each other.

It cannot, however, be ruled out that the comparator 21 may be configured to take a single measurement and compare it with a predetermined value of internal pressure P_{I}. In such a case, the comparator 21 is preferably configured to take a continuous measurement of the internal pressure P_{I} and to verify whether the latter remains constant or does not decrease.

In this case, the comparator 21 is configured to:
- activate at a first time t1 one of the measurement devices 19 to make a first measurement of the internal pressure P_{I} and to receive a first value of the internal pressure P_{I};
- activate at a second time t2 the other of the measurement devices 19 to make a second, preferably continuous measurement of the internal pressure P_{I} and to receive a second value of the internal pressure P_{I};
- verify whether the first value and the second value both fall within the predetermined range of values;
- generate a first signal when the first value and the second value fall within the predetermined range of values and a second signal when the first value and the second value fall outside the predetermined range of values.

As specified above, this verification is used to determine whether the internal pressure P_{I} does not decrease to ensure that the surface to be marked S is free of defects and is positioned correctly. In the event, therefore, of there being a decrease in pressure, the comparator 21 is configured to generate the second signal so that the laser light generator can be turned off and marking can be prevented.

Preferably, the verification is carried out in the second phase as it is more accurate.

Appropriately, the comparator 21 is configured to carry out a verification wherein the time interval between the first time and the second time is comprised between 0.5 and 5 seconds. In other words, the comparator 21 is configured to have between 0.5 and 5 seconds elapse between a first measurement and second measurement. The possibility cannot, however, be ruled out that the time interval between two measurements may be longer, shorter or substantially zero (real time).

It cannot, however, be ruled out that the comparator 21 may be configured to take more or fewer measurements to compare them with each other. It goes without saying that the greater the number of measurements, the greater the accuracy of the verification.

In accordance with one embodiment, the verification means 21 may be electronic devices similar to an electronic comparator with the same or similar functions such as e.g. a PLC, microcontroller, electronic control unit, microprocessor, PC and/or the like.

The comparator 21 can be directly installed in the measurement devices 19, or it can be connected to them by means of appropriate wired, pilot cable, wireless, Bluetooth, infrared and/or similar connections.

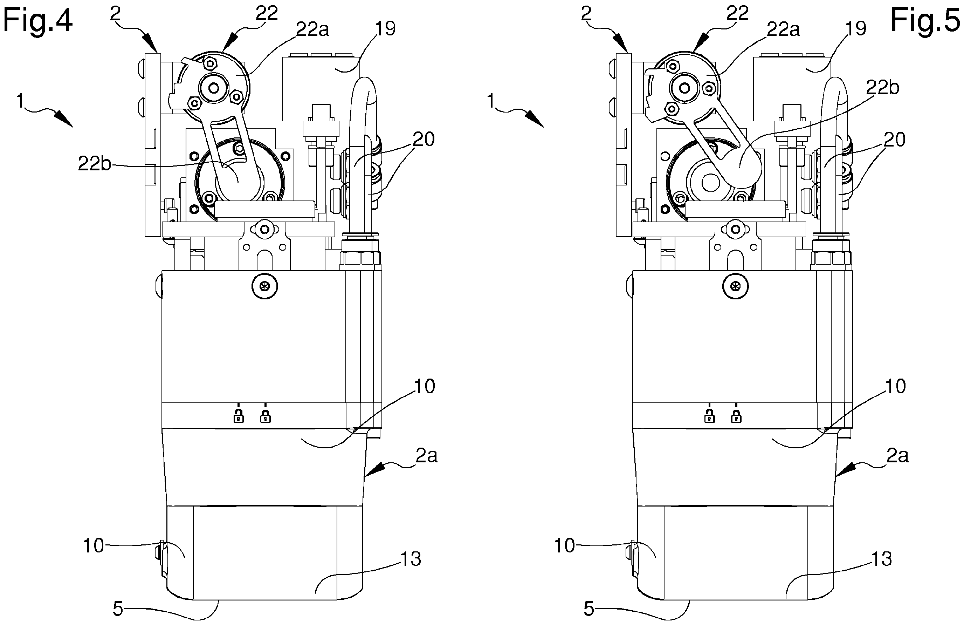

Advantageously, the device 1 comprises at least one plug element 22 operationally associated with the comparator 21 and movable between a blocking configuration (Figure 4), wherein it prevents the emission of laser light by the laser generator, and an emission configuration, wherein it allows the emission of laser light by the laser generator (Figure 5).

Specifically, the comparator 21 is configured to place the plug element 22 in the blocking/emission configuration following the generation of the second/first signal.

In the event, therefore, of an abnormal decrease in pressure occurring (e.g., as a result of the interruption of marking, if there are defects on the surface to be marked S, or if the device 1 is not properly positioned), the plug element 22 hinders the emission of the laser beam, thus interrupting laser emission.

This evidently makes it possible to obtain a device 1 with safe use and precise operation wherein the operation of the plug element 22 ensures that the laser beam is emitted only under conditions of regular operation, that is, when the internal pressure P_{I} is constant or increasing.

In this way, among other things, the comparator 21 arranges the plug element 22 in the blocking configuration whenever the use of device 1 is interrupted, with obvious and important safety advantages.

In accordance with the preferred embodiment, and as visible in Figures 4 and 5, the plug element 22 comprises:
- at least one base portion 22a associated with the marking head 2 in a rotatable manner; and
- at least one protruding portion 22b associated with the base portion 22a and adapted to overlap with/move away from the laser light path in the blocking/emission configuration.

It cannot, however, be ruled out that the protruding portion 22b of the plug element 22 may move between the blocking configuration and the emission configuration around its own vertical axis (similar to a butterfly plug), or by means of different kinematics such as shifting movements, telescopic movements, etc.

Specifically, the base portion 22a is hinged to the frame of the marking head 2 and rotates, together with the protruding portion 22b, between two limit ending positions corresponding to the blocking configuration and to the emission configuration.

As can be inferred from Figure 4, in the blocking configuration, the base portion 22a intercepts the laser beam coming from the laser generator, thus preventing the beam itself from being emitted on the surface to be marked S.

In other words, the base portion 22a operates as a barrier, physically hindering the passage of the laser beam.

As for the emission configuration (Figure 5), the base portion 22a is rotated with respect to the position previously occupied in the blocking configuration, with the result that it no longer intercepts the laser beam and thus allows the latter to be emitted on the surface to be marked S.

According to one embodiment, the laser light generator is not part of the portable device 1. In this embodiment, the portable device 1 is connectable to a laser light generator in a removable manner. That is, the marking chamber 2a is connectable to the laser light generator in a removable manner through the connecting means. In this case, the plug element 22 is also connectable to the laser light generator to control the operation thereof.

According to one embodiment, the laser light generator is part of the portable device 1. In this embodiment, the portable device 1 comprises a laser light generator associated with the marking chamber 2a to emit a laser light beam towards the marking opening 5. The plug element 22 is operationally connected to the laser light generator.

The operation of this portable device 1 in performing a method to safely carry out laser marking according to the invention is as follows.

As anticipated above, in order to safely make a marking, it is necessary to place the marking chamber 2a between the laser light generator and the surface to be marked S. Specifically, the head end 4 is placed in contact with the surface to be marked S so that the latter closes the marking opening 5. In other words, the operation of the present invention involves closing the marking opening of the marking chamber 2a with a surface to be marked S.

By means of such a step, it is possible to make a confined, substantially enclosed space bounded by the marking chamber 2a and the surface to be marked S within which the laser light beam is maintained during marking.

Next, the operation of the portable device 1 involves feeding a substantially constant flow of air into the marking chamber 2a. This air feeding is accomplished by activating the inlet line 6 described above.

At this point a verification of the soundness of the surface to be marked can be carried out. This verification can be done before and/or during the marking process.

In particular, this verification involves making at least a first measurement of the internal pressure of the marking chamber 2a at a first time t1 to obtain a first value of internal pressure, and a second measurement of the internal pressure of the marking chamber 2a at a second time t2 to obtain a second value of internal pressure. These measurements are made by means of the measurement devices 19. Preferably, the measurement devices 19 are controlled by the comparator 21, as described above in detail.

It cannot, however, be ruled out that the verification may involve taking fewer or more measurements.

Preferably, the verification process involves waiting between 0.1 and 5 seconds before taking the second measurement.

After the measurements have been taken, the second value is compared with the first value in order to verify their relationship.

Preferably, such a comparison is made automatically by the comparator 21 which generates a first signal if it detects that the values measured by the measurement devices 19 are within the predetermined range of values and a second signal if it detects that the values measured by the measurement devices 19 are outside the predetermined range of values.

In the event of the verification detecting that the values measured by the measurement devices 19 fall outside the predetermined range of values, then it is provided to block the emission of laser light towards the surface to be marked S by arranging the plug element 22 in the blocking configuration. Conversely, in case the verification finds that the values measured by the measurement devices 19 fall within the predetermined range of values, then the emission of laser light is allowed towards the surface to be marked S by arranging the plug element 22 in the emission configuration.

It has in practice been ascertained that the described invention achieves the intended objects, and in particular the fact is emphasized that, by means of the portable device for laser marking, it is possible to detect the presence of defects on the surface to be marked and/or its incorrect positioning and, at the same time, to remove the fumes generated during the marking process by means of a simple and effective solution.

## Claims

1. Portable device (1) for laser marking comprising:
- at least one marking head (2) provided with at least one gripping element (23) graspable by a user;
- at least one marking chamber (2a) associated with said marking head (2) positionable between a laser light generator configured to generate a laser light beam and a surface to be marked (S), said marking chamber (2a) comprising at least one head end (4) having a marking opening (5) for the passage of said laser light beam, wherein said head end (4) is intended, in use, to contact said surface to be marked (S) so that the latter closes said marking opening (5);
- at least one inlet line (6) in fluidic communication with said marking chamber (2a) and configured to feed, into the latter, a substantially constant flow of air;
- at least one air outlet opening (7) formed on said marking chamber (2a) and configured to allow air to escape from said marking chamber (2a) and fumes generated by the laser light beam during the marking of the surface to be marked (S);
- at least one measurement assembly (8) arranged at least partly inside said marking head (2), operationally associated with said marking chamber (2a) and configured to verify whether the value of the internal pressure (P_{I}) in said marking chamber (2a) and/or said flow of air fed from said inlet line (6) falls within a predetermined range of values in order to determine the possible presence of defects in said surface to be marked (S).

2. Portable device (1) according to claim 1, **characterized by** the fact that it comprises at least one duct (20) positioned in fluidic connection between the marking chamber (2a) and said measurement assembly (8) and by the fact that said measurement assembly (8) comprises at least one measurement device (19) associated with said duct (20) and adapted to receive from the latter said flow of air to measure said internal pressure value (P_{I}).

3. Portable device (1) according to claim 2, **characterized by** the fact that it comprises two of said ducts (20) and by the fact that said measurement assembly (8) comprises two of said measurement devices (19) mutually connected in parallel and each associated with a respective said duct (20).

4. Portable device (1) according to claim 2, **characterized by** the fact that it comprises two of said ducts (20) and by the fact that said measurement assembly (8) comprises of said two measurement devices (19) mutually connected in series and each associated with a respective said duct (20).

5. Portable device (1) according to one or more of the preceding claims, **characterized by** the fact that said measurement assembly (8) comprises verification means (21) configured to:
- activate at a first time (t1) one of said measurement devices (19) to make a first measurement of said internal pressure (P_{I}) and to receive a first value of said internal pressure (P_{I});
- activate at a second time (t2) the other of said measurement devices (19) to make a second measurement of said internal pressure (P_{I}) and to receive a second value of said internal pressure (P_{I});
- verify whether said first value and said second value fall within said range of values;
- generate a first signal when said first value and said second value fall within said range of values and a second signal when said first value and said second value fall outside said range of values.

6. Portable device (1) according to claim 5, **characterized by** the fact that it comprises at least one plug element (22) operationally associated with said verification means (21) and movable between a blocking configuration, wherein it prevents the emission of laser light by said laser generator, and an emission configuration, wherein it allows the emission of laser light by said laser generator, said verification means (21) being configured to place said plug element (22) in said blocking/emission configuration following the generation of said second/first signal.

7. Portable device (1) according to claim 6, **characterized by** the fact that said plug element (22) comprises:
- at least one base portion (22a) associated with said marking head (2); and
- at least one protruding portion (22b) associated with said base portion (22a) and adapted to overlap with/move away from the laser light path in said blocking/emission configuration.

8. Portable device (1) according to one or more of the preceding claims, **characterized by** the fact that said marking chamber (2a) is associated with said marking head (2) in a removable manner.

9. Portable device (1) according to claim 8, **characterized by** the fact that it comprises a plurality of said marking chambers (2a), differing from each other in shape and/or size, which can be associated with said marking head (2) in an interchangeable manner.

10. Method to safely make a laser marking comprising the phases of:
- having a portable device (1) according to one or more of the preceding claims;
- positioning said marking chamber (2a) between said laser light generator and said surface to be marked (S);
- closing said marking opening (5) with said surface to be marked (S);
- feeding a flow of air into said marking chamber (2a) by means of said inlet line (6);
- making, by means of one of said measurement devices (19), a first measurement of said internal pressure (P_{I}) of said marking chamber (2a) at a first time (t1) to obtain a first value of said internal pressure (P_{I});
- making, by means of the other of said measurement devices (19), a second measurement of said internal pressure (P_{I}) of said marking chamber (2a) at a second time (t2) to obtain a second value of said internal pressure (P_{I});
- assessing whether said first value and said second value fall within said predetermined range of values;
- blocking the emission of the laser light beam towards said surface to be marked (S).
